# EUROPÄISCHE PATENTSCHRIFT

(11) **EP 2 147 036 B1**
(45) Veröffentlichungstag und Bekanntmachung des Hinweises auf die Patenterteilung: **22.03.2017**
(21) Anmeldenummer: 08749980.2
(22) Anmeldetag: 02.05.2008
(51) Int. Cl.: C08G 63/90, C08L 63/08

(54) **VERFAHREN UND VORRICHTUNG ZUR REINIGUNG EINES RESORBIERBAREN POLYESTERS**
METHOD AND DEVICE FOR CLEANING AN ABSORPTIVE POLYESTER
PROCÉDÉ ET DISPOSITIF DE NETTOYAGE D'UN POLYESTER RÉSORBABLE

(30) Priorität: 04.05.2007 DE 102007020951
(43) Veröffentlichungstag der Anmeldung: 27.01.2010
(60) Teilanmeldung: 10173681.7
(73) Patentinhaber: Evonik Röhm GmbH, 64293 Darmstadt (DE)
(72) Erfinder: ENDERLE, Anja, 55216 Ingelheim am Rhein (DE); SCHMITT, Manfred, 55216 Ingelheim am Rhein (DE)
(86) Internationale Anmeldenummer: PCT/EP2008/055408
(87) Internationale Veröffentlichungsnummer: WO 2008/135523

(56) Entgegenhaltungen:
- EP-A- 0 283 925
- DE-A1- 4 218 268

## Beschreibung

Die Erfindung bezieht sich auf ein Verfahren zur Reinigung eines resorbierbaren Polyesters, wobei das Polymer in einem ersten Lösungsmittel gelöst und anschließend die Polymerlösung mit einem zweiten Lösungsmittel unter Einwirkung von hohen Scherkräften in einem turbulenten Scherfeld in innigen Kontakt gebracht wird, wobei das erste Lösungsmittel ein "echtes" Lösungsmittel darstellt und das zweite Lösungsmittel für den resorbierbaren Polyester einen Nichtlöser darstellt und mit dem ersten Lösungsmittel unbegrenzt mischbar ist.

Weiterhin bezieht sich die Erfindung auch auf einen resorbierbaren Polyester, welcher verfahrensgemäß gereinigt wird, und dessen Verwendung.

Ferner bezieht sich die Erfindung auf eine Reinigungsvorrichtung zur Reinigung eines resorbierbaren Polyesters, die als Hauptkomponenten ein Lösegefäß, in dem das Polymer in einem ersten Lösungsmittel gelöst wird, eine Trennvorrichtung zur Trennung einer feuchten Polymermasse aus einer Polymersuspension und einen Trockner zur Trocknung der Polymermasse enthält, und dass das Trommelschersieb eine Absaugvorrichtung, insbesondere mit einem Absaugstutzen, oberhalb des rotierenden, zylindrischen Siebkörpers in einer oberen Gehäuseabdeckung aufweist.

DE4218268A1 betrifft ein Fällungsverfahren zur Reinigung resorbierbarer Polyester, wobei das gefällte Polymer durch Filtration oder Zentrifugation abgetrennt wird.

DE 19800591A1 betrifft ein Verfahren zu Behandlung von Fluorpolymeren, bei dem eine Trommel-Siebmaschine eingesetzt wird. GB2164329A beschreibt eine Zusammensetzung für hydraulischen Zement, der ein fibröses Material enthält. Die wässrige Zementaufschlämmung kann dabei in einem rotierenden Trommelsieb (vor)entwässert werden.

Resorbierbare Polyester im Sinne der Erfindung sind Homopolymere oder Copolymere auf der Basis von Lactid (L-Lactid, D-Lactid, DL-Lactid, meso-Lactid), Glycolid, epsilon-Caprolacton, Dioxanon, Trimethylencarbonat, delta-Valerolacton, gamma-Butyrolacton, und ähnlichen polymerisierbaren Heterozyklen. Die Polymere können sich entweder aus einem oder auch aus mehreren verschiedenen Monomerbausteinen zusammensetzen sowie ggf. weitere Bausteine in der Polymerkette enthalten, wie zum Beispiel Einheiten des Ethylenglycols.

Erfindungsgemäß bevorzugt sind Homopolymere aus D,L-Lactid, Copolymere aus D,L-Lactid und Glycolid in verschiedener Zusammensetzung sowie Blockcopolymere aus den vorher genannten Polyestereinheiten und Polyethylenglycol.

Resorbierbare Polyester sind Rohstoffe, welche eine weite Verwendung für die Herstellung von resorbierbaren, chirurgischen Implantaten sowie auch als galenischer Hilfsstoff für die Formulierung von parenteralen Freigabesystemen gefunden haben. Beispielsweise finden Poly(lactide) und andere resorbierbare Polyester Einsatz in chirurgischen Implantaten zur Fixierung von Knochenfrakturen, in Netzen und Membranen zur gesteuerten Geweberegeneration und in Mikrokapseln und Implantaten zur subkutanen oder intramuskulären Injektion, insbesondere für die gesteuerte Freisetzung von Wirkstoffen. Nach Implantation oder Injektion in den Organismus zersetzen sich resorbierbare Polymere in langsamer hydrolytischer Reaktion zu Oligomeren. Hydrolyseendprodukte wie Milchsäure oder Glycolsäure werden zu Kohlendioxid und Wasser verstoffwechselt.

Die Synthese resorbierbarer Polyester ist aus dem Stand der Technik bekannt. Sie lassen sich durch Polykondensation aus Hydroxycarbonsäuren, wie Milchsäure und/oder Glycolsäure, herstellen. Ein anderer häufiger beschrittener Syntheseweg ist die ringöffnende Polymerisation der entsprechenden Heterocyclen.

Unabhängig vom Syntheseweg enthalten die Rohpolymere immer einen bestimmten Gehalt an nicht umgesetzten Monomeren, der auch bei Optimierung der entsprechenden Syntheseverfahren häufig nicht unter einen Wert von 1 bis 3 % zu reduzieren ist. Der Grund hierfür ist, dass die ringöffnende Polymerisation eine Gleichgewichtsreaktion darstellt und auch bei der Polykondensation der lineare Polyester im Gleichgewicht mit den entsprechenden Hydroxycarbonsäuren vorliegt.

Die Anwesenheit von Monomeren in den Polymeren ist aus folgenden Gründen äußerst problematisch:
a) Da die zyklischen Monomere gegenüber hydrolytischer Zersetzung deutlich instabiler sind als die linearen Polyester, zersetzen sie sich bei Feuchtigkeitszutritt schneller als die Polyester. Bei der hydrolytischen Zersetzung werden Säureäquivalente generiert, welche wiederum die hydrolytische Zersetzung auch der Polyester katalysiert. Die Implantation von monomerhaltigen Polyestern würde also einen deutlich beschleunigten Abbau des Werkstoffs im Körper nach sich ziehen.
b) Aus dem gleichen Grund ist die Lagerstabilität monomerhaltiger Polyester und daraus hergestellter Implantate oder pharmazeutischen Formulierungen deutlich verschlechtert.
c) Ebenfalls verschlechtert sich die Stabilität resorbierbarer Polyester bei thermoplastischer Verarbeitung, wenn Restgehalte an Monomeren zugegen sind.
d) Das Verkaspelungsverhalten der nicht gereinigten Polyester ist anders als das von gereinigten Polyestern, ebenso das Freisetzungsverhalten und das Abbauverhalten. Verkapselte Wirkstoffe, wie Peptide, können durch die gegenüber gereinigten Polymeren größere Menge an freier Säure geschädigt oder zerstört werden.
e) Bei den Synthesereaktionen lässt sich der Restmonomergehalt im Rohpolymeren häufig nur schwierig steuern. Variabilitäten im Restmonomergehalt führen dann automatisch auch zu nicht zu tolerierenden Batch-to-Batch-Variationen in der Abbaugeschwindigkeit, der Lager- und der Verarbeitungsstabilität, so dass Werkstoffe in reproduzierbarer Qualität ohne einen nachfolgenden Reinigungsschritt zur Abreicherung der Restmonomere nicht zu erhalten sind.

Reinigungsverfahren zur Abtrennung von Restmonomeren aus resorbierbaren Polyestern sind ebenfalls im Stand der Technik bekannt.

Teilkristalline Polyester lassen sich durch Extraktionsverfahren von Monomeren befreien. Hierfür sind Lösungsmittel geeignet, welche das Monomere lösen, jedoch das Polymere nicht lösen. Geeignet sind beispielsweise organische Lösungsmittel wie n-Hexan, cyclo-Hexan, Methanol, Ethanol, Aceton oder Ethylacetat. Die EP 0456246 offenbart beispielsweise ein Extraktionsverfahren für resorbierbare Polyester, welches Kohlendioxid als Lösungsmittel verwendet.

Amorphe Polyester können im Allgemeinen nicht durch Extraktionsverfahren gereinigt werden, da die in Frage kommenden Lösungsmittel das Polymere entweder ebenfalls lösen oder zumindest quellen lassen. Bei Verwendung von überkritischem oder druckverfüssigtem Kohlendioxid kommt es bei der Entspannung zu einem starken Aufschäumen der Polymermasse, was ein solches Verfahren ebenfalls nicht durchführbar macht. Im Stand der Technik sind für die Reinigung amorpher Polyester eine Reihe von Umfällungsverfahren offenbart. Hierbei wird das Rohpolymer in einem geeigneten Lösungsmittel gelöst. Durch Zugabe eines großen Überschusses eines Nichtlösers, der jedoch mit dem Löser mischbar ist, wird das Polymere ausgefällt. Beispielsweise ist die Umfällung eines poly(L-Lacid)-poly(ethylenglycol)- poly(L-Lacid) durch Lösen in Chloroform und Fällen in Methanol oder Methanol/Chloroformmischungen offenbart (J. Matsumotot et all; Int. J. of Pharm.; 185; 1999; 93-101). Die offenbarten Umfällungsverfahren haben den Nachteil, dass sie mit einem immensen Verbrauch an organischen Lösungsmitteln verbunden sind und zudem die Phasenseparation fest/flüssig und somit die Produktisolierung äußerst schwierig ist. Dies liegt insbesondere auch daran, dass die Polyester an der Kontaktstelle, an der die Polymerlösung mit dem Nichtlöser in Kontakt tritt, zur Verklumpung neigen. Eine Anwendung im industriellen Maßstab ist daher schwierig.

Die US-A-4 810 775 offenbart ein Reinigungsverfahren für resorbierbare Polyester mit einer Kristallinität bis zu 20 %, wobei man das Polymer in einem Lösungsmittel löst, anschließend die Polymerlösung mit einem Fällungsmittel unter Einwirkung von hohen Scherkräften in einem turbulenten Scherfeld in innigen Kontakt bringt. Das turbulente Scherfeld wird durch eine Vorrichtung erzeugt, die aus einer Zweistoffdüse und aus einem mit Fällungsmittel gefüllten Behälter besteht, in welchem die Zweistoffdüse hineinragt, so dass das ausfallende Polymer in kleinste Teilchen zerteilt wird. Es ist jedoch nicht gezeigt, wie ein derartiges Verfahren in großem Maßstab ökonomisch durchzuführen ist. Die Phasenseparierung der bei der Umfällung entstehenden Polymersuspension erfolgt entweder in einer Zentrifuge oder durch Sammlung in Vorlagenbehältern, die aufgrund des hohen Lösungsmittelbedarfs auch bei relativ kleinen Batch-Größen groß dimensioniert sein müssen.

Es ist daher Aufgabe der Erfindung, ein verbessertes Reinigungsverfahren zur Reinigung eines resorbierbaren Polyesters, insbesondere amorphen Polyesters, der eingangs genannten Art zur Verfügung zu stellen, welches es gestattet, den resorbierbaren Polyester in einer hohen und reproduzierbaren Qualität auch im industriellen Maßstab zu erhalten. Es ist weiterhin Aufgabe der Erfindung, eine entsprechende Vorrichtung für das erfindungsgemäße Verfahren bereitzustellen.

Die das Verfahren betreffende Aufgabe wird erfindungsgemäß dadurch gelöst, dass anschließend die Polymersuspension, welche durch Zugabe des zweiten Lösungsmittels entstanden ist, auf oder in einen rotierenden, zylindrischen Siebkörper eines Trommelschersiebes gefördert und anschließend die feuchte Polymermasse aus dem Siebkörper getrennt und daran anschließend getrocknet wird.

Damit wird ein kontinuierlich arbeitendes Trennverfahren bereitgestellt, welches erlaubt, die Polymersuspension mit hoher Reproduzierbarkeit in die Fest- und Flüssigphase kostengünstig zu separieren. Aufgrund der kontinuierlichen Arbeitsweise können Chargen in gleich bleibender Qualität unabhängig von der Menge bereitgestellt werden.

Verfahrenstechnisch ist vorgesehen, dass als erstes Lösungsmittel Aceton, Ethylacetat, 1,4-Dioxan, Dimethylacetamid, Tetrahydrofuran, Toluol, Dimethylformamid, Dimethylsulfoxid, Hexafluoroisopropanol oder ein anderer halogenierter Kohlenwasserstoff oder eine Mischung aus den vorgenannten Lösungsmitteln verwendet wird. Somit wird je nach Polyestertyp und der inhärenten Viskosität des Polyesters in Lösung ein geeignetes Lösungsmittel bereitgestellt. Als besonders geeignet haben sich als erstes Lösungsmittel Aceton, Chloroform oder Dichlormethan herausgestellt.

Bevorzugt wird als zweites Lösungsmittel Ethanol, Methanol oder Wasser oder eine Mischung aus den vorgenannten Lösungsmitteln verwendet. Sonach können besonders effektive Fällungsreaktionen, je nach verwendetem erstem Lösungsmittel, erreicht werden, wobei insbesondere Wasser als zweites Lösungsmittel verwendet wird. Wasser ist nicht toxisch und nicht explosiv, jedoch kostengünstig und besonders umweltverträglich.

Nach einer Weiterbildung wird der im ersten Lösungsmittel gelöste resorbierbare Polyester gefiltert und anschließend über eine Zweistoffdüse mit dem zweiten Lösungsmittel gemischt. Hierbei ist unter Einwirkung von hohen Scherkräften in dem turbulenten Scherfeld ein inniger Kontakt gegeben, wodurch eine optimale Durchmischung erzielt wird. Eine alternative intensive Durchmischung kann auch erzielt werden, wenn beide Medien aus zwei separaten Düsen in ein Strömungsrohr eingespritzt werden und an der Kontaktstelle mittels eines schnell drehenden Rührers ein Wirbelbett erzeugt wird.

Die Trennung der feuchten Polymermasse wird vorteilhafterweise effektiv mittels Schwerkraft und mittels einer oder mehrerer spiralförmig angebrachter Förderschienen und/oder Leitschaufeln im Inneren des rotierenden, zylindrischen Siebkörpers durchgeführt. Dadurch wird eine Zwangsförderung erzielt, die es erlaubt, die Polymermasse kontinuierlich beispielsweise in einen Vorlagebehälter zu fördern.

Um einen geringen Restfeuchte- bzw. einen Restlösungsmittelgehalt zu erhalten, wird zweckmäßigerweise zur Trocknung der feuchten Polymermasse diese mit Stickstoff oder Luft in einem Trockner durchströmt.

Nach dem erfindungsgemäßen Verfahren lassen sich insbesondere resorbierbare Polyester, die eine amorphe oder teilkristalline Struktur aufweisen, kostengünstig und mit gleich bleibender Qualität reinigen.

Derartig gereinigte resorbierbare Polyester enthalten bevorzugt eine oder mehrere Einheiten, abgeleitet von Lactid (L-Lactid, D-Lactid, DL-Lactid, meso-Lactid), Glycolid, Trimethylencarbonat, epsilon-Caprolacton, gamma-Butyrolacton, Dioxanon, delta-Valerolacton und / oder ähnlichen polymerisierbaren Heterozyklen und/oder Polyethylenglycolen. Besonders bevorzugt ist ein resorbierbarer Polyester, der aus D,L-Lactid oder Copolymere aus D,L-Lactid und Gylcolid mit beliebiger Zusammensetzung zusammengesetzt ist oder ein Blockcopolymer aus D,L- Lactid, oder D,L-Lactid co Glycolid mit beliebiger Zusammensetzung und Polyethylenglycol.

Der Restmonomergehalt nach der durchgeführten Reinigung gemäß dem erfindungsgemäßen Verfahren beträgt kleiner 1 %, insbesondere kleiner 0,5 %, wobei ein Restmonomergehalt von unter 0,1 % erzielbar ist.

Nach der Trocknung beträgt der Lösungsmittel- und/oder Feuchtegehalt des resorbierbaren Polyesters kleiner 2 %, wobei unter günstigen Einstellungen auch Werte unter 1 %, insbesondere auch Werte unter 0,5 % erzielt werden. Bei besonders intensiver Trocknung beträgt der Lösungsmittel- und/oder Feuchtegehalt des resorbierbaren Polyesters < 0,1 %.

Eine besonders bevorzugte Verwendung des resorbierbaren Polyesters sieht die Herstellung von pharmazeutischen Formulierungen oder resorbierbaren Implantaten vor.

Die die Reinigungsvorrichtung betreffende Aufgabe wird erfindungsgemäß dadurch gelöst, dass die Trennvorrichtung als Trommelschersieb mit einem rotierenden, zylindrischen Siebkörper aufgebaut ist.

Mit dieser Art von Trennvorrichtung, wie sie beispielsweise bereits in anderen Branchen zur kontinuierlichen Entwässerung hoher Feststofflasten eingesetzt wird, hat sich überraschenderweise gezeigt, dass damit Polymersuspensionen, die aus einer Fällungsreaktion entstanden sind, mit gleich bleibender Qualität auch bei schwankendem Durchsatz kostengünstig in eine Polymermasse und in Lösungsmittelreste getrennt werden können.

Förderschienen und/oder Leitschaufeln im Inneren des zylindrischen Siebkörpers bewirken zusammen mit der Drehbewegung des Siebkörpers, dass die Polymermasse kontinuierlich in beispielsweise einen Vorlagebehälter gefördert werden kann.

Bei einer vorteilhaften Ausführungsform weist das Trommelschersieb eine Absaugvorrichtung, insbesondere mit einem Absaugstutzen, oberhalb des rotierenden, zylindrischen Siebkörpers in einer oberen Gehäuseabdeckung auf. Hierdurch ist eine Absaugung von Lösungsmitteldämpfen gegeben, was insbesondere beim Einsatz von beispielsweise Aceton, Ethanol oder Methanol von Vorteil ist, da durch die Absaugvorrichtung die Explosionsschutzklasse des umgebenden Gebäudes reduziert sein kann.

Hinsichtlich einer effektiven Trocknung der feuchten Polymermasse ist besonders ein als Wirbelschichttrockner, Umlufttrockner oder Strömungsrohrtrockner ausgebildeter Trockner geeignet. Der Trockner weist in bevorzugter Ausführungsform einen konischen Abschnitt und einen zylindrischen Abschnitt auf, wobei im konischen Abschnitt des Trockners aufgrund des von unten einströmenden Trocknungsmittels, z.B. Stickstoff oder Luft, eine intensive Verwirbelung der zu trocknenden Polymermasse erzielt wird. Um eine Verklumpung zu reduzieren, ist eine Reibe für das Polymer vorgesehen. Während der Trocknung kann die zu trocknende Polymermasse dem Trockner entnommen und über die Reibe gerieben werden, wonach die Trocknung fortgesetzt wird.

Um zu verhindern, dass das Polymer aus dem Trockner in ein Zuleitungssystem gelangt, weist der Trockner im Inneren des zylindrischen Abschnitts mindestens einen Siebeinsatz auf. Zum Auffangen des gereinigten resorbierbaren Polyesters umfasst der Trockner zweckmäßigerweise einen Filtersack. Mit einer Schwenklagerung des Trockners in einem Gestell kann der Trockner gekippt werden, so dass der endseitig an dem Trockner befestigte Filtersack mit dem getrockneten Polymerpulver einfach entnommen werden kann. Im Weiteren kann die zu trocknende Polymeermasse während der Trocknung leichter durchmischt werden.

Nach einer weiteren Ausgestaltung sind mindestens die Produkt führenden Teile des Trommelschersiebs und des Trockners aus Edelstahl gefertigt, wodurch eine hohe Produktqualität im Hinblick auf pharmakologische Anforderungen gewährleistet ist.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

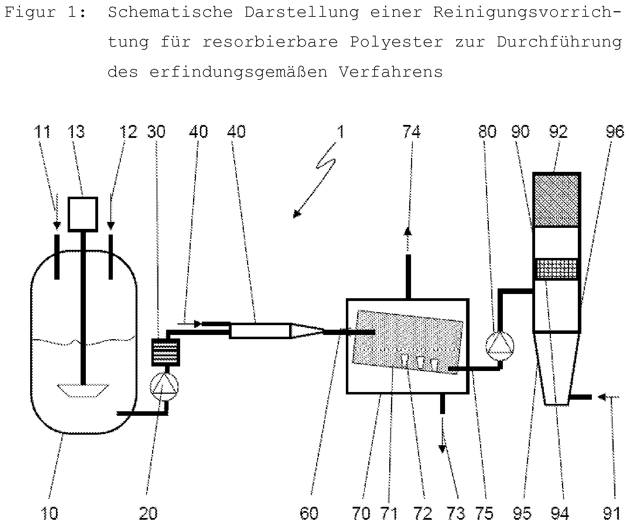

- Fig.1: eine schematische Darstellung einer Reinigungsvorrichtung für resorbierbare Polyester zur Durchführung des erfindungsgemäßen Verfahrens,
- Fig.2: eine perspektivische Explosionsdarstellung des Trommelschersiebes nach Fig. 1 und
- Fig.3: eine perspektivische Darstellung des Trockners nach Fig. 1.

Eine Reinigungsvorrichtung 1 umfasst als Hauptkomponente für einen ersten Verfahrenschritt ein Lösegefäß 10, in dem ein zu reinigendes Polyester-Rohprodukt 11 vorgelegt wird. Eine typische Größe für das Lösegefäß 10 liegt im Bereich von 50 bis 1000 1 und kann bei größeren Anlagen auch 2000 1 oder mehr betragen. Durch Zugabe von einem ersten Lösungsmittel 12 wird in dem Lösegefäß 10 das Polyester-Rohprodukt 11 unter Zuhilfenahme eines Rührwerks 13 und/oder durch ständiges Umpumpen der Lösung gelöst. Verunreinigungen im Polyester-Rohprodukt 11, beispielsweise in Form von Fusseln, werden beispielsweise durch Filtrieren abgeschieden. Als bevorzugte erste Lösungsmittel 12 haben sich beispielsweise folgende Lösungsmittel herausgestellt: Aceton, Ethylacetat, 1,4-Dioxan, Dimethylacetamid, Tetrahydrofuran, Toluol, Dimethylformamid, Dimethylsulfoxid, Hexafluoroisopropanol oder ein anderer halogenierter Kohlenwasserstoff oder eine Mischung aus den vorgenannten Lösungsmitteln. Als besonders geeignet haben sich bei den resorbierbaren Polyestern Aceton, Chlorform oder Dichlormethan als erstes Lösungsmittel 12 erwiesen.

Mittels einer Pumpe, z.B. einer Membranpumpe, wird die Polymerlösung über einen Filter 30, der ein feinmaschiges Sieb, vorzugsweise aus Edelstahl, enthält, gepumpt. In diesem Schritt werden unlösliche Verunreinigungen abgetrennt. Typische Maschenweiten liegen hier bei einigen µm, typischerweise im Bereich von 1 bis 10 µm.

Die Polymerlösung wird anschließend über eine Zweistoffdüse 40 mittels eines zweiten Lösungsmittels 41, das ein NichtLösungsmittel für das Polymer darstellt, intensiv vermischt und die daraus entstehende Polymersuspension über eine Fördereinrichtung 60, im einfachsten Fall direkt oder über ein Strömungsrohr bzw. eine Leitung, wobei die Förderung mittels Schwerkraft, konventioneller Pumpen oder durch Druckbeaufschlagung mittels eines Gases erfolgen kann, in das Innere eines rotierenden Siebkörpers 71 eines Trommelschersiebs 70 geleitet. Als zweites Lösungsmittel 41 wird Ethanol, Methanol oder Wasser oder eine Mischung aus den vorgenannten Lösungsmitteln zum Ausfällen verwendet. Ein besonders bevorzugtes zweites Lösungsmittel 41 stellt aufgrund der toxikologischen Unbedenklichkeit und der Umweltverträglichkeit Wasser dar.

Im Inneren des rotierenden Siebkörpers 71 des Trommelschersiebs 70 kann die Polymersuspension in das Lösungsmittelgemisch und in die ausgefällte Polymermasse getrennt werden. Eine oder mehrere spiralförmig angebrachte Führungsschienen und/oder Leitschaufeln 72 im Innern des Siebkörpers 71 unterwerfen die Polymermasse einer Zwangsförderung, so dass die Polymermasse zu einem Feststoffausgang 75 transportiert wird. Das Lösungsmittelgemisch kann dabei durch einen Flüssigkeitsablauf 73 nach unten abfließen. Lösungsmitteldämpfe können über eine Absaugvorrichtung 74, z.B. einen Absaugstutzen, in einer Gehäuseabdeckung 76 des Trommelschersiebs 70 oberhalb des Siebkörpers 71 abgesaugt werden, was hinsichtlich der Ex-Schutzklasse des umgebenden Gebäudes vorteilhaft ist.

Die am Feststoffausgang 75 angesammelte, noch feuchte Polymermasse wird mit einer Feststoff-Fördereinrichtung 80 entweder direkt in einen Trockner 90 oder in ein Auffanggefäß transportiert. Eine batchweise Befüllung des Trockners 90 aus dem Auffanggefäß ist neben der kontinuierlichen Beschickung möglich. Der Trockner 90 weist einen konischen Abschnitt 95 und einen zylindrischen Abschnitt 96 auf. Im Inneren des zylindrischen Abschnitts 96 ist mindestens ein Siebeinsatz 94 vorgesehen. Das Trocknungsmittel 91, z.B. Stickstoff oder Luft, wird von unten seitlich in den konischen Abschnitt 95 des Trockners 90 eingeleitet, so dass eine intensive Verwirbelung im Innern des Trockners 90 erzielt wird. Zum Auffangen des gereinigten und getrockneten resorbierbaren Polyesters weist der Trockner 90 einen Filtersack 92 auf.

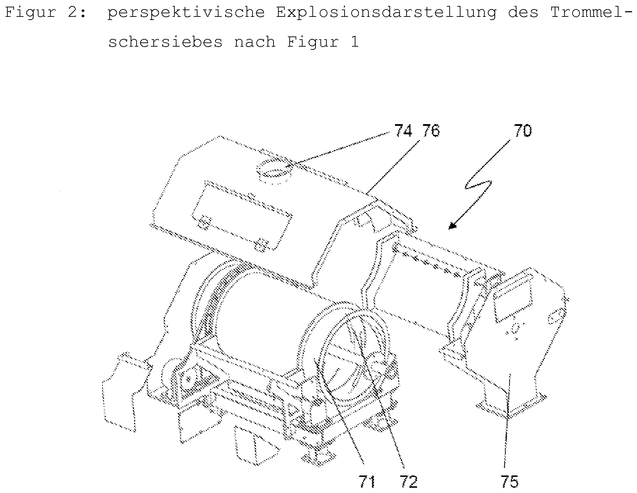

Bei der Ausführung des Trommelschersiebes 70 nach Fig. 2 ist im Inneren der rotierende Siebkörper 71 zu erkennen, in den die Polymersuspension über eine U-förmige Rinne eingebracht werden kann. Der Siebkörper 71 ist leicht schräg gestellt. Eine oder mehrere spiralförmig angebrachte Führungsschienen und/oder Leitschaufeln 72 im Innern des Siebkörpers 71 bewirken die Zwangsförderung der Polymermasse zum Feststoffausgang 75. Lösungsmitteldämpfe werden über die Absaugvorrichtung 74 in der Gehäuseabdeckung 76 des Trommelschersiebs 70 oberhalb des Siebkörpers 71 abgesaugt. Der Siebkörper 71 ist an der Rückseite geschlossen, um Kontamination des Siebinneren mit Abrieb der Antriebseinheit zu vermeiden. Die Rückseite kann zu Reinigungszwecken geöffnet werden.

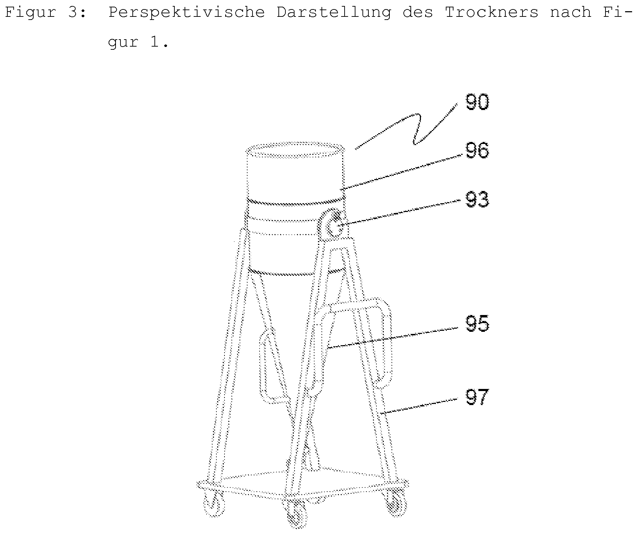

Der in einem fahrbaren Gestell 97 angeordnete Trockner 90 nach Fig. 3 kann mittels einer Schwenklagerung 93 gekippt werden. Nicht dargestellt ist der Filtersack 92. Im Übrigen sind mindestens die Produkt führenden Teile des Trommelschersiebs 70 und des Trockners 90 aus Edelstahl gefertigt.

Das erfindungsgemäße Verfahren wird nachfolgend beschrieben:
Das Polyester-Rohprodukt 11 wird mit der zuvor berechneten Menge an Aceton als erstes Lösungsmittel 12 gelöst. Das Polyester-Rohprodukt 11 wird abgewogen und im Lösegefäß 10 vorgelegt. Die berechnete Menge an Aceton wird zugegeben und das Rohprodukt durch Umpumpen innerhalb von ca. 24 - 72 Stunden gelöst. Das Mischungsverhältnis ist von den verwendeten Ausgangsstoffen (Monomeren bzw. Heterozyklen) und der inhärenten Viskosität des Rohproduktes abhängig und beträgt z.B. bei einem Copolymer aus D,L-lactid und Glycolid; 50:50 mol %; inhärente Viskosität von 0,5 dl/g gemessen als 0,1 %-ige Lösung in Chloroform; Lösung zur Fällung entfällt 8 Gew.-% Polymer in Aceton.

Die Polymerlösung wird mittels der Pumpe 20 über einen Filter 30 aus Edelstahl mit einer Maschenweite von 5 µm und einem Durchflussmesser in die Zweistoffdüse 40 befördert. Der Durchfluss ist abhängig von der Art des eingesetzten Rohproduktes und beträgt in der Regel bis zu 20 1/h. Diese Angabe bezieht sich auf ein Durchflussmessgerät, das auf die Dichte von Aceton eingestellt ist. Durch die unterschiedlichen Dichten der zu fällenden Polymerlösungen ist keine exakte Durchflussmessung möglich (Ausnahme Massedurchflussmesser). In der Zweistoffdüse 40 wird die Polymerlösung in einen Wasserstrahl bei einer Durchflussmenge von ca. 700 - 1000 1/h eingedüst, wobei das gelöste Rohprodukt sofort in Form von Flocken oder Fasern ausfällt.

Die Suspension, bestehend aus Wasser, Produktflocken, Monomer und Aceton, wird über eine Leitung in das Trommelschersieb 70 geleitet. Dabei wird die Suspension in den hinteren Bereich des Trommelschersiebes 70 geführt. Durch die Drehbewegung bildet sich dort zunächst durch das ablaufende Wasser/Aceton-Gemisch, das die abzutrennenden Monomere enthält, eine Produktschicht. Ist diese schwer genug, löst sie sich von der Wandung und bildet ein Produktknäuel (Schneeballsystem). Durch die nach vorne schräg verlaufenden Leitschaufeln 72 und die Drehbewegung werden diese Produktknäuel langsam zum Feststoffausgang 75 des Siebkörpers 71 hin befördert. Die Abtrennung des Wasser/Aceton-Gemisches erfolgt einerseits mittels Schwerkraft und andererseits durch keilförmige Siebprofilstäbe und den dadurch entstehenden Coandä-Effekt.

Der Feststoff wird mittels der Feststoff-Fördereinrichtung 80 in den Trockner 90 oder das Auffanggefäß geleitet. In dem als Strömungsrohrtrockner ausgebildeten Trockner 90 wird die feuchte Polymermasse mittels Durchströmung von Luft oder Stickstoff getrocknet.

## Patentansprüche

1. Verfahren zur Reinigung eines resorbierbaren Polyesters, wobei das Polymer in einem ersten Lösungsmittel (12) gelöst und anschließend die Polymerlösung mit einem zweiten Lösungsmittel (41) unter Einwirkung von hohen Scherkräften in einem turbulenten Scherfeld in innigen Kontakt gebracht wird, wobei das erste Lösungsmittel (12) ein "echtes" Lösungsmittel darstellt und das zweite Lösungsmittel (41) für den resorbierbaren Polyester einen Nichtlöser darstellt und mit dem ersten Lösungsmittel (12) unbegrenzt mischbar ist, **dadurch gekennzeichnet,**
**dass** anschließend die Polymersuspension, welche durch Zugabe des zweiten Lösungsmittels (41) entstanden ist,
auf oder in einen rotierenden, zylindrischen Siebkörper (71) eines Trommelschersiebes (70) gefördert und anschließend die feuchte Polymermasse aus dem Siebkörper (71) getrennt und daran anschließend getrocknet wird.

2. Verfahren nach Anspruch 1, **dadurch gekennzeichnet, dass** als erstes Lösungsmittel (12) Aceton, Ethylacetat, 1,4-Dioxan, Dimethylacetämid, Tetrahydrofuran, Toluol, Di-methylformamid, Dimethylsulfoxid, Hexafluoroisopropanol oder ein andere halogenierter Kohlenwasserstoff oder eine Mischung aus den vorgenannten Lösungsmitteln verwendet wird.

3. Verfahren nach einem der Ansprüche 1 oder 2, **dadurch gekennzeichnet, dass** als erstes Lösungsmittel (12) Aceton, Chloroform oder Dichlormethan verwendet wird.

4. Verfahren nach einem der Ansprüche 1 bis 3, **dadurch gekennzeichnet, dass** als zweites Lösungsmittel (41) Ethanol, Methanol oder Wasser oder eine Mischung aus den vorgenannten Lösungsmitteln verwendet wird.

5. Verfahren nach einem der Ansprüche 1 bis 4, **dadurch gekennzeichnet, dass** der im ersten Lösungsmittel (12) gelöste resorbierbare Polyester gefiltert und anschließend über eine Zweistoffdüse (40) mit dem zweiten Lösungsmittel (41) gemischt wird.

6. Verfahren nach einem der Ansprüche 1 bis 5, **dadurch gekennzeichnet, dass** die Trennung der feuchten Polymermasse mittels Schwerkraft und mittels einer oder mehrerer spiralförmig angebrachter Förderschienen und/oder Leitschaufeln (72) im Inneren des rotierenden, zylindrischen Siebkörpers (71) durchgeführt wird.

7. Verfahren nach einem der Ansprüche 1 bis 6, **dadurch gekennzeichnet, dass** zur Trocknung der feuchten Polymermasse diese mit Stickstoff oder Luft in einem Trockner (90) durchströmt wird.

8. Reinigungsvorrichtung zur Reinigung eines resorbierbaren Polyesters, die als Hauptkomponenten ein Lösegefäß (10), indem das Polymer- in einem ersten Lösungsmittel (12) gelöst wird, eine Trennvorrichtung zur Trennung einer feuchten Polymermasse aus einer Polymersuspension und einen Trockner (90) zur Trocknung der Polymermasse enthält, **dadurch gekennzeichnet, dass** die Trennvorrichtung als Trommelschersieb (70) mit einem rotierenden, zylindrischen Siebkörper (71) aufgebaut ist und
dass das Trommelschersieb (70) eine Absaugvorrichtung (74), insbesondere mit einem Absaugstutzen, oberhalb des rotierenden, zylindrischen Siebkörpers (71) in einer oberen Gehäuseabdeckung (76) aufweist.

9. Reinigungsvorrichtung nach Anspruch **8, dadurch gekennzeichnet, dass** der zylindrischen Siebkörper (71) in seinem Inneren Förderschienen und/oder Leitschaufeln (72) aufweist.

10. Reinigungsvorrichtung nach einem der Ansprüche 8 bis 9, **dadurch gekennzeichnet, dass** der Trockner (90) ein Wirbelschichttrockner, ein Umlufttrockner oder ein Strömungsrohrtrockner ist.

11. Reinigungsvorrichtung nach einem der Ansprüche 8 bis 10, **dadurch gekennzeichnet, dass** der Trockner (90) einen ko-nischen Abschnitt (95) und einen zylindrischen Abschnitt (96) aufweist

12. Reinigungsvorrichtung nach einem der Ansprüche 8 bis 11, **dadurch gekennzeichnet, dass** der Trockner (90) im Inneren des zylindrischen Abschnitts (96) mindestens einen Siebeinsatz (94) umfasst..

13. Reinigungsvorrichtung nach einem der Ansprüche 8 bis 12, **dadurch gekennzeichnet, dass** der Trockner (90) zum Auffangen des gereinigten resorbierbaren Polyesters einen Filtersack (92) aufweist.

14. Reinigungsvorrichtung nach einem der Ansprüche 8 bis 13, **dadurch gekennzeichnet, dass** der Trockner (90) mit einer Schwenklagerung (93) versehen ist.

15. Reinigungsvorrichtung nach einem der Ansprüche 8 bis 14, **dadurch gekennzeichnet, dass** mindestens die Produkt führenden Teile des Trommelschersiebs (70) und des Trockners (90) aus Edelstahl gefertigt sind.

## Claims

1. Process for purifying a resorbable polyester, where the polymer is dissolved in a first solvent (12) and the polymer solution is subsequently brought into intimate contact with a second solvent (41) under the action of high shear forces in a turbulent shear field, where the first solvent (12) is a "genuine" solvent and the second solvent (41) is a nonsolvent for the resorbable polyester and is miscible in all proportions with the first solvent (12), **characterized in that** the polymer suspension which has been formed by addition of the second solvent (41) is subsequently conveyed onto or into a rotating, cylindrical sieve body (71) of a drum shear sieve (70) and the moist polymer mass is subsequently separated from the sieve body (71) and subsequently dried.

2. Process according to Claim 1, **characterized in that** acetone, ethyl acetate, 1,4-dioxane, dimethylacetamide, tetrahydrofuran, toluene, dimethylformamide, dimethyl sulphoxide, hexafluoroisopropanol or another halogenated hydrocarbon or a mixture of the abovementioned solvents is used as first solvent (12).

3. Process according to either Claim 1 or 2, **characterized in that** acetone, chloroform or dichloromethane is used as first solvent (12).

4. Process according to any of Claims 1 to 3, **characterized in that** ethanol, methanol or water or a mixture of the abovementioned solvents is used as second solvent (41).

5. Process according to any of Claims 1 to 4, **characterized in that** the resorbable polyester dissolved in the first solvent (12) is filtered and subsequently mixed by means of a two-fluid nozzle (40) with the second solvent (41).

6. Process according to any of Claims 1 to 5, **characterized in that** the separation of the moist polymer mass is carried out by means of gravity and by means of one or more helically installed conveying rails and/or guide blades (72) in the interior of the rotating, cylindrical sieve body (71).

7. Process according to any of Claims 1 to 6, **characterized in that** in order to dry the moist polymer mass, nitrogen or air is passed through the polymer mass in a dryer (90).

8. Purification apparatus for purifying a resorbable polyester, which contains, as main components, a dissolution vessel (10) in which the polymer is dissolved in a first solvent (12), a separating apparatus for separating a moist polymer mass from a polymer suspension and a dryer (90) for drying the polymer mass, **characterized in that** the separating apparatus is configured as a drum shear sieve (70) having a rotating, cylindrical sieve body (71) and **in that** the drum shear sieve (70) has an extraction facility (74), in particular with an extraction pot, above the rotating, cylindrical sieve body (71) in an upper housing cover (76).

9. Purification apparatus according to Claim 8, **characterized in that** the cylindrical sieve body (71) has conveying rails and/or guide blades (72) in its interior.

10. Purification apparatus according to either Claim 8 or 9, **characterized in that** the dryer (90) is a fluidized-bed dryer, a circulating air dryer or a flow tube dryer.

11. Purification apparatus according to any of Claims 8 to 10, **characterized in that** the dryer (90) has a conical section (95) and a cylindrical section (96).

12. Purification apparatus according to any of Claims 8 to 11, **characterized in that** the dryer (90) comprises at least one sieve insert (94) in the interior of the cylindrical section (96).

13. Purification apparatus according to any of Claims 8 to 12, **characterized in that** the dryer (90) has a filter bag (92) for collecting the purified resorbable polyester.

14. Purification apparatus according to any of Claims 8 to 13, **characterized in that** the dryer (90) is provided with a swivel bearing (93).

15. Purification apparatus according to any of Claims 8 to 14, **characterized in that** at least the parts of the drum shear sieve (70) and the dryer (90) which come into contact with the product are made of stainless steel.

## Revendications

1. Procédé de purification d'un polyester résorbable, où le polymère est dissout dans un premier solvant (12), puis la solution de polymère est mise en contact intime avec un deuxième solvant (41) sous l'action d'importantes forces de cisaillement dans un champ de cisaillement turbulent, le premier solvant (12) représentant un "vrai" solvant et le deuxième solvant (41) représentant pour le polyester résorbable un non-solvant et étant infiniment miscible au premier solvant (12),
**caractérisé en ce qu'**ensuite, la suspension de polymère produite par l'ajout du deuxième solvant (41) est acheminée sur ou dans le corps de tamisage cylindrique rotatif (71) d'un tamis à tambour (70), puis la masse de polymère humide est séparée du corps de tamisage (71) puis séchée.

2. Procédé selon la revendication 1, **caractérisé en ce qu'**on utilise comme premier solvant (12) de l'acétone, de l'acétate d'éthyle, du 1,4-dioxane, du diméthylacétamide, du tétrahydrofurane, du toluène, du diméthylformamide, du diméthylsulfoxyde, de l'hexafluoroisopropanol ou un autre hydrocarbure halogéné ou un mélange de ces solvants.

3. Procédé selon l'une des revendications 1 ou 2, **caractérisé en ce qu'**on utilise comme premier solvant (12) de l'acétone, du chloroforme ou du dichlorométhane.

4. Procédé selon l'une des revendications 1 à 3, **caractérisé en ce qu'**on utilise comme deuxième solvant (41) de l'éthanol, du méthanol, de l'eau ou un mélange de ces solvants.

5. Procédé selon l'une des revendications 1 à 4, **caractérisé en ce que** le polyester résorbable dissout dans le premier solvant (12) est filtré puis mélangé au deuxième solvant (41) par une buse à deux fluides (40).

6. Procédé selon l'une des revendications 1 à 5, **caractérisé en ce que** la séparation de la masse de polymère humide est effectuée par gravité et au moyen d'un ou plusieurs rails d'acheminement et/ou une ou plusieurs aubes directrices (72) en spirale à l'intérieur du corps de tamisage cylindrique rotatif (71).

7. Procédé selon l'une des revendications 1 à 6, **caractérisé en ce que** pour sécher la masse de polymère humide, celle-ci est traversée par de l'azote ou de l'air dans un sécheur (90).

8. Dispositif de purification pour la purification d'un polyester résorbable, qui contient comme principaux composants un réservoir de solvant (10), où le polymère est dissout dans un premier solvant (12), un dispositif séparateur pour séparer une masse de polymère humide d'une suspension de polymère, et un sécheur (90) pour sécher la masse de polymère, **caractérisé en ce que** le dispositif séparateur est conçu comme un tamis à tambour (70) avec un corps de tamisage cylindrique rotatif (71), et
**en ce que** le tamis à tambour (70) présente un dispositif d'aspiration (74), en particulier avec une tubulure d'aspiration au-dessus du corps de tamisage cylindrique rotatif (71) dans un couvercle de boîtier supérieur (76).

9. Dispositif de purification selon la revendication 8, **caractérisé en ce que** le corps de tamisage cylindrique (71) présente en son intérieur des rails d'acheminement et/ou des aubes directrices (72).

10. Dispositif de purification selon la revendication 8 ou 9, **caractérisé en ce que** le sécheur (90) est un sécheur à lit fluidisé, un sécheur à air ou un sécheur à tube d'écoulement.

11. Dispositif de purification selon l'une des revendications 8 à 10, **caractérisé en ce que** le sécheur (90) présente une portion conique (95) et une portion cylindrique (96).

12. Dispositif de purification selon l'une des revendications 8 à 11, **caractérisé en ce que** le sécheur (90) comprend à l'intérieur de la portion cylindrique (96) au moins un dispositif de tamisage (94).

13. Dispositif de purification selon l'une des revendications 8 à 12, **caractérisé en ce que** le sécheur (90) présente un sac de filtration (92) pour recueillir le polyester résorbable purifié.

14. Dispositif de purification selon l'une des revendications 8 à 13, **caractérisé en ce que** le sécheur (90) est muni d'un appui pivotant (93).

15. Dispositif de purification selon l'une des revendications 8 à 14, **caractérisé en ce que** les pièces du tamis à tambour (70) et du sécheur (90) qui conduisent le produit sont préparées en inox.
